Europäisches Patentamt

European Patent Office

Office européen des brevets

(11) Publication number: **0 268 353 B1**

(19)

(12) **EUROPEAN PATENT SPECIFICATION**

(45) Date of publication of patent specification: **15.07.92** (51) Int. Cl.5: **B01D 53/34**

(21) Application number: **87307884.4**

(22) Date of filing: **07.09.87**

Divisional application 91115149.6 filed on 07/09/87.

(54) **Controlling emission of pollutants from coal-fired boiler systems.**

(30) Priority: **19.11.86 US 932754**

(43) Date of publication of application:
**25.05.88 Bulletin 88/21**

(45) Publication of the grant of the patent:
**15.07.92 Bulletin 92/29**

(84) Designated Contracting States:
**DE ES FR GB IT SE**

(56) References cited:
**EP-A- 0 217 733**
**DE-A- 3 235 020**
**US-A- 4 464 350**

(73) Proprietor: **THE BABCOCK & WILCOX COMPANY**
**1010 Common Street, P.O. Box 60035**
**New Orleans, Louisiana 70160(US)**

(72) Inventor: **Doyle, John B.**
**7645 Onyx Avenue, N.W.**
**Massillon Ohio 44646(US)**
Inventor: **Pirsh, Ed A.**
**4723 Ranchwood Drive**
**Akron Ohio 44313(US)**
Inventor: **Downs, William**
**8645 Shubert Avenue**
**Alliance Ohio 44601(US)**

(74) Representative: **Cotter, Ivan John et al**
**D. YOUNG & CO. 10 Staple Inn**
**London WC1V 7RD(GB)**

Rank Xerox (UK) Business Services

## Description

This invention relates to controlling emission of pollutants from coal-fired boiler systems, for example in coal-fired electric power plants.

Advanced control technologies have rapidly evolved during the past two decades for dealing with emission from coal-fired power plants of particulates, sulphur oxides and nitrogen oxides.

A dramatic shift to low-sulphur coals, which produce high-resistivity fly-ashes, that are more difficult to collect, and the concurrent demand for increased particulate efficiency, has placed a heavy burden on conventional dust collectors (electrostatic precipitators) employed in these applications. Consequently, in the late 1970s the power generator industry began, on a significant scale, to utilise alternative technology --fabric filterhouses-- for particulate control.

In a bag filterhouse (baghouse), fly-ash is separated from flue gas by filtration, i.e. the fly-ash is collected on the upstream side of tubularly shaped fabric filter bags as the gas is directed through the filter bags. The flue gas passes through a filter bag, typically from the inside out, and the fly-ash is collected as so-called filter cake. The material collected on the bag becomes part of the filtering medium. After a certain build-up of filter cake over the course of operation, the bags must be cleaned to avoid excessive pressure drop in order to maintain proper gas volume flow. The use of a bag filterhouse gives the power generator company the option of switching coals since bag filterhouse collection efficiency is relatively insensitive to fuel characteristics.

Nevertheless, as coal burns, most of the sulphur content is converted to sulphur oxides ($SO_x$), typically $SO_2$ and $SO_3$. In addition, oxides of nitrogen (collectively referred to as $NO_x$) are formed. Utilisation and placement of $NO_x$ and $SO_x$ control equipment upstream of the bag filterhouse will influence inlet conditions. Overall location of the bag filterhouse relative to such equipment, as well as the plant air heaters, flue gas temperature, flue gas composition, and fabric filter specifications including material properties such as composition, tensile strength, abrasion resistance, chemical resistance and temperature limitations, comprise the major parameters which must be carefully considered, integrated and controlled in order to achieve satisfactory overall plant emission control.

Our US Patent No.US-A-4309386 discloses a system in which a hot catalytic baghouse (greater than 316°F (600°F)) is used for simultaneous particulate removal and $NO_x$ reduction. According to US-A-4309386, filter bags of the baghouse are treated with a catalyst to facilitate a selective catalytic reduction process while simultaneously filtering out particulate matter from the gas stream. The baghouse is situated downstream from an ammonia injection system. In the baghouse, the flue gas stream is exposed to the treated bags to effect $NO_x$ removal. However, that system has several potential shortcomings. In particular, bags impregnated with the catalyst tend to have an unduly limited life span, necessitating periodic replacement of the entire bag, and the catalyst is subject to $SO_x$ poisoning which can lead to loss of ability to reduce $NO_x$ in the presence of gases containing high quantities of $SO_x$.

Therefore, continuing improvements are being sought in emission control systems employing fabric baghouses with satisfactory control of $SO_x$ and $NO_x$ emissions.

According to the invention there is provided a method of controlling emission of pollutants from a coal-fired boiler system, which system includes a boiler, an economiser, a fabric filter baghouse and an air heater in a serial fluid communication path, by removing, in a temperature range of 316°C to 427°C (600°F to 800°F), $SO_x$, $NO_x$ and particulates from a combustion flue gas stream passing through said path, the method comprising the steps of:

(a) adding ammonia and a reagent, which reagent is also a catalyst, selected from the group consisting of alumina, alkalised alumina, sodium aluminate, dawsonite, analcite, magnesioriebeckite, feldspar, alunite, anatase, azurite, bauxite, bunsenite, gothite, hematite, ironspinel, ilmenite, malachite, manganite, manganosite, mellite, siderite, spinel and metal oxides of titanium, vanadium, manganese, cobalt, iron, nickel, copper and zinc in powdered form into the combustion flue gas stream upstream of the fabric filter baghouse intermediate the boiler and the economiser in a temperature zone having a temperature below the melting point of the reagent;

(b) reacting some of the reagent and ammonia with the $SO_x$ and $NO_x$ to form reaction products while passing the flue gas stream to the baghouse;

(c) separating the particulates, the reaction products and the reagent from the flue gas within the temperature range by filtration in the baghouse to form a filter cake;

(d) passing the flue gas stream through the filter cake to react additional reagent and ammonia with the $SO_x$ and $NO_x$ to form additional reaction products and cleansed gas; and

(e) venting the cleansed gas out of the baghouse through the air heater.

Thus a suitable reagent is pneumatically injected into a boiler in fine powder form, in a temperature zone below the melting point of the reagent, upstream of a hot baghouse, which is operating in a temperature range of 600°F to 800°F (approximately 316°C to 427°C) and which is located between an exit of an economiser of the boiler and an air heater. Ammonia is also injected in this vicinity. A reaction between the $NO_x$ and ammonia converts the $NO_x$ to harmless nitrogen gas and a reaction between $SO_x$ and the reagent produces a solid particulate which continues to flow with the flue gas. The mixture of reactants, reaction products, and flue gases continues to flow to the baghouse, where the particulates are separated from the flue gas.

The injection technique advantageously provides an extended time for reaction of the reagent and the $SO_x$ and $NO_x$ as the flue gas stream flows from the injection point to fabric filter bags of the baghouse. Further reaction takes place as the solids are collected in the filter bags as filter cake and the flue gases continue to pass through the filter cake.

The reagent is removed from the baghouse, along with the fly-ash, for regeneration. Poisoning of the catalyst with $SO_x$ is no longer a problem since the method seeks to achieve reaction of the reagent with $SO_x$ to remove the sulphur oxides from the gas stream and the reaction is otherwise acceptable due to the continuous replenishment of the reagent by regeneration.

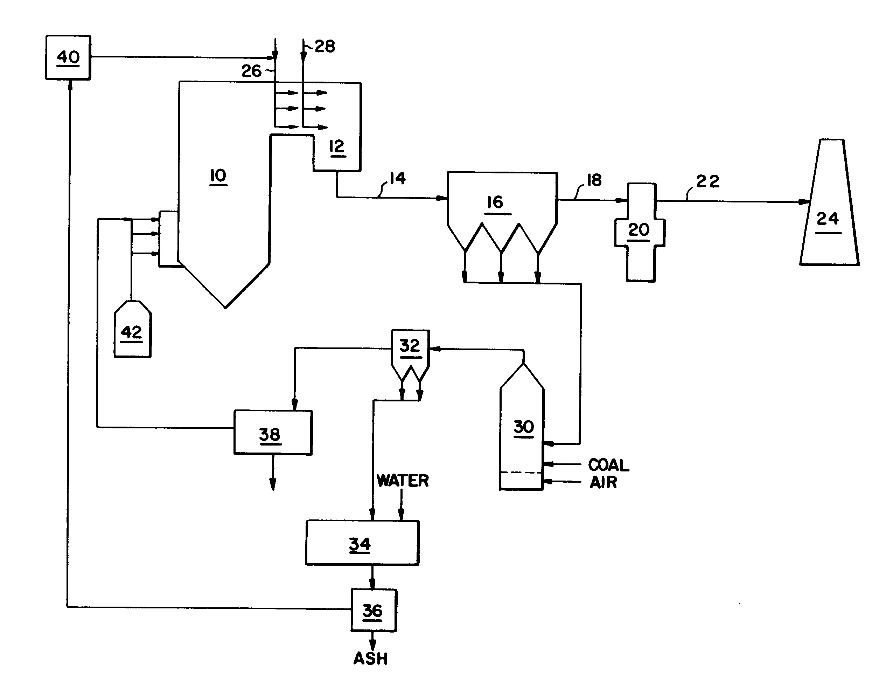

The invention will now be further described, by way of illustrative and non-limiting example, with reference to the accompanying drawing, the sole figure of which is a simplified flow diagram illustrating a preferred arrangement for carrying out a method embodying the invention.

The drawing shows a coal-fired boiler 10 that includes an economiser 12 which is designed, as is well known, to remove heat from the combustion flue gases after the gases leave steam-generating and superheating sections of the boiler 10. An outlet of the economiser 12 is connected through a flue gas conduit 14 to a baghouse 16 in which particulates are collected in filter bags (not shown). The treated gas is discharged from the baghouse 16 through a conduit 18 to an air preheater 20 and then through a conduit 22 to a stack 24 for ultimate discharge to the atmosphere.

Injection lines 26,28 are provided for injecting a solid reagent which is also a catalyst and ammonia ($NH_3$), respectively, into a zone, having a temperature below the reagent melting point, upstream of the baghouse 16. For example, as shown in the drawing, the solid reagent and ammonia are injected upstream of the economiser 12, i.e. intermediate the boiler 10 and the economiser 12.

Pneumatic injection of the reagent, via wall injectors, is preferred. The ammonia is preferably injected between a primary superheater and the economiser 12 as placement further upstream would result in excessive loss of ammonia by oxidation. The temperature at the economiser inlet will typically be between 371°C and 538°C (700°F and 1000°F), and the preferred operating range is 316°C to 427°C (600°F to 800°F). Reagents are selected which will not react with ammonia in this temperature range.

The combustion flue gas, which contains particulates, $SO_x$ and $NO_x$, reacts with the reagent as it flows through the economiser 12 and to the baghouse 16. As the gas flows from the injection point through the baghouse 16, the reagent reacts with $SO_x$ and $NO_x$ and ammonia. The reagent reacts further as it collects in the filter bags and the flue gas passes through it.

Sodium aluminate is the preferred reagent. Other reagents include transition metal oxides of titanium, vanadium, manganese, cobalt, iron, nickel, copper and zinc; alumina (particularly gamma phase) and alkalised alumina; and minerals including dawsonite, analcite, magnesioriebeckite, feldspars, alunite, anatase, azurite, bauxite, bunsenite, gothite, hematite, iron spinel, ilmenite, malachite, manganite, manganosite, mellite, siderite, and spinel.

The spent reagent material is removed from the baghouse 16 with the fly-ash. The spent material contains sulphur from the flue gas in the form of sulphates and sulphites. The spent material and fly-ash are then fed into a fluid bed gasifier 30 where coal is added as a fuel source and the temperature of the sulphated spent material is raised to a level where the sulphur is driven off in the form of sulphur dioxide and hydrogen sulphide. The reagent is then removed from the gas stream with the fly-ash via a particulate collector 32, such as a secondary baghouse, precipitator, or high efficiency cyclone. The collected solids are then added to water in a mixing tank 34 to form a slurry. The reagent goes into solution. The slurry is then directed to a solid separator 36, such as a belt filter or centrifuge, where the ash is removed from the system. The solution containing the regenerated reagent is then recycled as make-up back to the boiler 10. A drier 40 may be required prior to injecting the reagent into the boiler.

The spent gas from the fluid bed gasifier 30 may be taken to a Klaus plant 38 where the $SO_2$ and $H_2S$ may be recovered in the form of elemental sulphur. A portion of the steam produced in the fluid bed gasifier 30 may be used for the operation of the Klaus plant 38. The low J(Btu) gas would then be sent back to the boiler 10 as additional fuel with pulverised coal from a pulveriser 42 or could be used for other plant process requirements. There is a possibility that this gas could be used in the production of ammonia which in turn could be used as the make-up for the $NO_x$ reduction process.

Attention is directed to our application number 91115149.6 divided out from this application.

## Claims

1. A method of controlling emission of pollutants from a coal-fired boiler system, which system includes a boiler (10), an economiser (12), a fabric filter baghouse (16) and an air heater (20) in a serial fluid communication path, by removing, in a temperature range of 316°C to 427°C (600°F to 800°F), $SO_x$, $NO_x$ and particulates from a combustion flue gas stream passing through said path, the method comprising the steps of:

   (a) adding (26,28) ammonia and a reagent, which reagent is also a catalyst, selected from the group consisting of alumina, alkalised alumina, sodium aluminate, dawsonite, analcite, magnesioriebeckite, feldspar, alunite, anatase, azurite, bauxite, bunsenite, gothite, hematite, ironspinel, ilmenite, malachite, manganite, manganosite, mellite, siderite, spinel and metal oxides of titanium, vanadium, manganese, cobalt, iron, nickel, copper and zinc in powdered form into the combustion flue gas stream upstream of the fabric filter baghouse (16) intermediate the boiler and the economiser in a temperature zone having a temperature below the melting point of the reagent;

   (b) reacting some of the reagent and ammonia with the $SO_x$ and $NO_x$ to form reaction products while passing the flue gas stream to the baghouse (16);

   (c) separating the particulates, the reaction products and the reagent from the flue gas within the temperature range by filtration in the baghouse (16) to form a filter cake;

   (d) passing the flue gas stream through the filter cake to react additional reagent and ammonia with the $SO_x$ and $NO_x$ to form additional reaction products and cleansed gas; and

   (e) venting the cleansed gas out of the baghouse (16) through the air heater (20).

2. A method according to claim 1, wherein the reacting step (b) comprises reacting some of the reagent and ammonia with the $SO_x$ and $NO_x$ to form reaction products while passing the flue gas stream through the economiser (12) to the baghouse (16).

3. A method according to claim 1 or claim 2, comprising reclaiming reagent from the cake by heating (30) the cake to a temperature sufficient to volatilise and drive off sulphur dioxide and hydrogen sulphide from the cake and form remaining solids containing recoverable reagent, slurrying the collected solids with water, separating (32) the recoverable reagent from the solids, and wherein the adding step (a) includes passing the recovered reagent into the combustion gas stream.

## Revendications

1. Procédé de contrôle du dégagement des produits polluants d'une chaudière à charbon, le système comprenant une chaudière (10), un économiseur (12), un porte-sacs filtrants (16) en tissu et un réchauffeur d'air (20) en une voie de communication de fluide en série, le procédé consistant en l'extraction, dans une plage de températures comprises entre 316°C et 427°C (600°F et 800°F), de $SO_x$, $NO_x$ et de matières particulaires d'un flux de gaz de fumée passant par ladite voie, le procédé comprenant les phases consistant à :

   (a) ajouter de l'ammoniaque (26,28) et un réactif, lequel réactif est également un catalyseur, sélectionné parmi le groupe consistant en alumine, alumine alcalinisée, aluminate de sodium, dawsonite, analcite, magnésioriebeckite, feldspath, alunite, anatase, azurite, bauxite, bunsénite, gothite, oligiste, spinelle de fer, ilménite, malachite, manganite, manganosite, mellite, sidérite, spinelle et des oxydes métalliques de titane, vanadium, manganèse, cobalt, fer, nickel, cuivre et zinc sous forme de poudre dans le flux de gaz de fumée en amont du porte-sacs filtrants (16) en tissu entre la chaudière et l'économiseur dans une zone à une température inférieure au point de fusion du réactif;

   (b) faire réagir une partie du réactif et de l'ammoniaque avec les $SO_x$ et $NO_x$ pour former des produits de réaction tout en faisant passer le flux de gaz de fumée dans le porte-sacs (16);

   (c) séparer les matières particulaires, les produits de réaction et le réactif du gaz de fumée dans la plage de températures par filtration dans le porte-sacs (16) pour former un gâteau de filtre;

   (d) faire passer le flux de gaz de fumée dans le gâteau de filtre pour faire réagir du réactif et de l'ammoniaque supplémentaires avec les $SO_x$ et $NO_x$ afin de former des produits de réaction en plus et un gaz nettoyé; et

   (e) évacuer le gaz nettoyé du porte-sacs (16) via le réchauffeur d'air (20).

2.  Procédé selon la revendication 1, dans lequel la phase de mise en réaction (b) consiste à faire réagir une partie du réactif et de l'ammoniaque avec les $SO_x$ et $NO_x$ pour former des produits de réaction tout en faisant passer le flux de gaz de fumée via l'économiseur (12) dans le porte-sacs (16);

3.  Procédé selon la revendication 1 ou 2, comprenant les phases consistant à récupérer le réactif du gâteau en chauffant (30) le gâteau à une température suffisante pour volatiliser et entraîner le dioxyde de sulfure et l'acide sulhydrique du gâteau et former des solides restants renfermant un réactif récupérable, faire une bouillie des solides recueillis avec de l'eau, séparer (32) le réactif récupérable des solides, et dans lequel la phase d'addition (a) comprend le passage du réactif récupéré dans le flux de gaz de fumée.

**Patentansprüche**

1.  Verfahren zum Kontrollieren der Emission von Verunreinigungen aus einem kohlebeheizten Kesselsystem, wobei das System einen Kessel (10), einen Abgasvorwärmer (12), ein Sackgehäuse (16) für einen Gewebefilter und einen Luftheizer (20) in einem seriellen Fluidverbindungsweg aufweist, durch Entfernen von $SO_x$, $NO_x$ und Feinstoffen aus einem Verbrennungsabgasstrom, welcher durch diesen Weg hindurchtritt, in einem Temperaturbereich von 316°C bis 427°C (600°F bis 800°F), wobei das Verfahren die folgenden Schritte aufweist:
    (a) Hinzufügen (26,28) von Ammoniak und einem Reagenz, welches auch ein Katalysator ist, ausgewählt aus der Gruppe, die besteht aus Aluminiumoxid, alkalisiertem Aluminiumoxid, Natriumaluminat, Dawsonit, Analcit, Magnesioriebeckit, Feldspat, Alunit, Anatas, Azurit, Bauxit, Bunsenit, Gothit, Hematit, Eisenspinell, Ilmenit, Malachit, Manganit, Manganosit, Mellit, Siderit, Spinell und Metalloxiden von Titan, Vanadium, Mangan, Kobalt, Eisen, Nickel, Kupfer und Zink in pulverisierter Form, in den Strom aus Verbrennungsabgas stromaufwärts von dem Sackgehäuse (16) für den Gewebefilter zwischen dem Kessel und dem Abgasvorwärmer in einer Temperaturzone, die eine Temperatur hat, die unterhalb des Schmelzpunktes des Reagenzmittels liegt,
    (b) Reagierenlasen des Reagenz und des Ammoniaks mit dem $SO_x$ und dem $NO_x$, um Reaktionsprodukte zu bilden, während der Abgastrom zu dem Sackgehäuse (16) geleitet wird,
    (c) Abtrennen der Teilchen, der Reaktionsprodukte und des Reagenz aus dem Abgas innerhalb des Temperaturbereiches durch Filtern in dem Sackgehäuse (16), so daß ein Filterkuchen gebildet wird,
    (d) Hindurchleiten des Abgasstromes durch den Filterkuchen, um zusätzliches Reagenz und Ammoniak mit dem $SO_x$ und dem $NO_x$ reagieren zu lassen und so zusätzliche Reaktionsprodukte und gereinigtes Gas zu bilden, und
    (e) Entlüften des gereinigten Gases aus dem Sackgehäuse (16) heraus durch den Luftheizer (20).

2.  Verfahren nach Anspruch 1, wobei der Reaktionsschritt (b) das Reagieren lassen von etwas Reagenz und Ammoniak mit $SO_x$ und $NO_x$ aufweist, um Reaktionsprodukte zu bilden, während der Abgasstrom durch den Abgasvorwärmer (12) zu dem Sackgehäuse (16) geleitet wird.

3.  Verfahren nach Anspruch 1 oder 2, welches den Schritt aufweist, daß Reagenz aus dem Filterkuchen zurückgewonnen wird durch Erhitzen (30) des Kuchens auf eine Temperatur, die ausreichend ist, um Schwefeldioxid und Schwefelwasserstoff flüchtig zu machen und aus dem Kuchen auszutreiben und um übrigbleibende Feststoffe zu bilden, die wiedergewinnbares Reagenz enthalten, Aufschlämmen der gesammelten Feststoffe mit Wasser, Abtrennen (32) des wiedergewinnbaren Reagenz von den Feststoffen, und wobei der Schritt (a) des Hinzufügens einschließt, daß rückgewonnenes Reagenz in den Verbrennungsgasstrom geleitet wird.